# EUROPÄISCHE PATENTSCHRIFT

(11) **EP 1 772 344 B1**
(45) Veröffentlichungstag und Bekanntmachung des Hinweises auf die Patenterteilung: **27.09.2017**
(21) Anmeldenummer: 06020751.1
(22) Anmeldetag: 02.10.2006
(51) Int. Cl.: B62D 6/10, B62D 1/02, B62D 1/12

(54) **Lenkbetätigungseinrichtung für ein Fahrzeug, insbesondere für ein Flurförderfahrzeug**
Steering input means for a vehicle, in particular industrial truck
Organe de commande d'une direction de véhicule, en particulier pour un chariot de manutention

(30) Priorität: 05.10.2005 DE 102005047766
(43) Veröffentlichungstag der Anmeldung: 11.04.2007
(73) Patentinhaber: Jungheinrich Aktiengesellschaft, 22047 Hamburg (DE)
(72) Erfinder: Schönauer, Michael, 85368 Moosburg (DE); Hämmerl, Robert, 84098 Hohenthal (DE)
(74) Vertreter: Weickmann & Weickmann PartmbB

(56) Entgegenhaltungen:
- EP-A- 0 900 719
- DE-A1- 19 625 500
- DE-C1- 10 114 688
- US-A1- 2001 052 893
- US-A1- 2002 108 804
- US-A1- 2005 247 508

## Beschreibung

Die Erfindung betrifft ein Flurförderzeug als Fahrzeug, umfassend eine Lenkantriebsvorrichtung und eine Lenkbetätigungseinrichtung mit einem Bedienungselement zur Vorgabe von Lenkbefehlen durch Ausübung von Drehmomenten auf das Bedienungselement durch eine Bedienungsperson, einer Sensoranordnung zur Überwachung des Lenkbefehlvorgabezustandes des Bedienungselementes und einer elektronischen Steuereinrichtung zur Umsetzung der von der Sensoranordnung erfassten Lenkbefehlvorgabedaten in Steuerungsinformationen für die Lenkantriebsvorrichtung, wobei die Sensoranordnung dazu eingerichtet ist, den jeweiligen Lenkbefehlvorgabezustand des Bedienungselementes vermittels der Überwachung der elastischen Materialdeformation, insbesondere Torsion, eines durch ein Lenkbefehlvorgabedrehmoment am Bedienungselement auf elastische Deformation beanspruchten, mit dem Bedienungselement gekoppelten oder diesem zugehörigen Elementes zu erfassen, und wobei die Steuereinrichtung dazu eingerichtet ist, die Lenkantriebsvorrichtung nach einem Lenkcharakteristikprogramm zu steuern, welches jeweils die Stärke und/oder Dauer des von der Sensoranordnung erfassten jeweiligen Lenkbefehlvorgabedrehmomentes berücksichtigt, um Steuerungsinformationen für die Lenkantriebsvorrichtung bereitzustellen, wobei das Bedienungselement eine Bedienungskonsole mit zwei im Abstand voneinander angeordneten Griffen ist, vermittels derer eine Bedienungsperson ein Lenkbefehlvorgabedrehmoment auf die Bedienungskonsole ausüben kann.

Es sind Flurförderzeuge, insbesondere Elektro-Gabelstapler bekannt, die ein drehbar gelagertes Lenkbedienungselement aufweisen, wobei es sich normalerweise um ein Lenkrad handelt. Zur Überwachung der Drehstellung des Lenkrades dient üblicherweise ein Winkelgeber, dessen Messsignal einer elektronische Steuerungseinrichtung zugeführt wird. Die elektronische Steuerungseinrichtung umfasst üblicherweise wenigstens einen Mikroprozessor und ist dazu eingerichtet, abhängig vom jeweiligen Dreheinschlag des Lenkbedienungselementes einen Lenkmotor zu steuern, welcher ggf. über ein Lenkgetriebe auf ein lenkbares Rad des Flurförderzeugs wirkt, um letzteres zu lenken.

Es sind auch Flurförderzeuge bekannt, bei denen ein solches Lenkbedienungselement in Form eines Lenkrades an einer Bedienungskonsole drehbar gelagert ist, welche weitere Aktuatoren für die Steuerung von weiteren Fahrfunktionen oder/und Arbeitsfunktionen des Flurförderzeugs aufweist.

Es sind konventionelle Hilfskraft-Lenksysteme bekannt, bei denen Lenkbetätigungsdrehmomente an einer drehbar gelagerten Lenksäule oder an einer an einem Lenkschemel angreifenden Lenkdeichsel mittels Kraftsensoren oder Drehmomentsensoren messtechnisch erfasst und die Messwerte zur Steuerung der Dosierung von Lenkhilfskräften eines Lenkunterstützungsmotors verwendet werden.

Beispiele für Flurförderzeuge mit solchen konventionellen Hilfskraft-Lenksystemen sind z. B. in der EP 0 900 719 A1 und in der US 2005/0247508 A1 erläutert. Es handelt sich dabei um sog. Mitgeh-Flurförderzeuge mit Deichsellenkung, bei denen die Bedienungsperson eine üblicherweise horizontal zur Vorgabe von Lenkbewegungen schwenkbare - und vertikal zur Steuerung von Fahrfunktionen des Mitgeh-Flurförderzeugs schwenkbare Deichsel führt und hierzu an einem Deichselkopf angreift.

Die Bedienungsperson geht dabei mit dem Flurförderzeug mit. Kraftsensoren oder dgl. sind vorgesehen, um an der Deichsel wirkende Verschwenkkräfte zu messen und entsprechende Kraftsignale zu erzeugen, die von einer Steuereinrichtung verarbeitet werden, um auf der Basis dieser Signale einen Motor zur Unterstützung der Lenkbewegung des Bedieners zu steuern. Es findet somit keine Beschränkung der Lenkbewegung des als Lenkdeichsel bzw. als Lenkdeichselkopf ausgebildeten Bedienungselementes statt, sondern eine Lenkkraftunterstützung durch den Motor.

Zum Stand der Technik von Hilfskraft-Lenksystemen und bewegbar gelagerten Lenkbedienungselementen mit Erfassung der darauf ausgeübten Bedienungskräfte durch betreffende Sensoren kann ferner auf die DE 101 14 688 C1 und die DE 196 25 500 A1 verwiesen werden.

Der vorliegenden Erfindung liegt die Aufgabe zugrunde, bei einem Flurförderzeug der eingangs genannten Art die Lenkbetätigungseinrichtung zu vereinfachen und bedienungsfreundlicher zu machen.

Zur Lösung dieser Aufgabe wird erfindungsgemäß vorgeschlagen, dass die Bedienungskonsole mittels eines Haltestutzens an einem Karosserie- oder Rahmenteil des Fahrzeugs so fahrzeugfest fixiert ist, dass sie über elastische Materialdeformation hinaus keinen Lenkbewegungsspielraum hat, wobei die Sensoranordnung dazu eingerichtet ist, Torsionen des Haltestutzens als Maß für Lenkbefehlvorgabedrehmomente zu erfassen.

Diese erfinderische Idee eröffnet die Möglichkeit, als Bedienungselement einen fixierten und somit nicht mittels Drehlager drehbar gelagerten Lenker zu verwenden, dessen Beaufschlagung mit einem Drehmoment zu elastischer Torsion im Halterungsgestänge führt, das den Lenker mit einem Rahmenteil oder Karosserieteil des Fahrzeugs verbindet. Die Sensoranordnung umfasst vorzugsweise wenigstens einen Torsionssensor oder Kraft-WegSensor zur Erfassung der Torsion. Dabei kann es sich z.B. um Dehnungsmessstreifen oder/und Piezoelemente oder dgl. handeln. Grundsätzlich kommen diverse Torsionsmesseinrichtungen, statische Drehmomentgeber, Dehnungsmesssysteme usw. zur Erfassung der elastischen Torsion bzw. elastischen Materialdeformation in Frage. Die Steuereinrichtung ist dazu eingerichtet, die Lenkantriebsvorrichtung nach einem Lenkcharakteristikprogramm zu steuern, welches jeweils die Stärke und/oder Dauer des von der Sensoranordnung erfassten jeweiligen Lenkbefehlvorgabedrehmomentes berücksichtigt, um Steuerungsinformationen für die Lenkantriebsvorrichtung bereitzustellen. Insbesondere können für die Steuereinrichtung verschiedene Lenkcharakteristikprogramme zur Verfügung stehen, die automatisch in Abhängigkeit von sich ändernden Fahrzeugbetriebsbedingungen, wie etwa dem Bruttogewicht des Fahrzeugs, oder wahlweise von der Bedienungsperson manuell aufrufbar sind, um ein jeweiliges Lenkverhalten des Fahrzeugs einzustellen.

Das auf elastische Deformation, insbesondere Torsion beanspruchte Element kann aus Metall, z.B. Stahl, bestehen. In einer bevorzugten Ausführungsform ist das auf elastische Materialdeformation beanspruchte Element hauptsächlich aus Kunststoff oder Hartgummi hergestellt. Die Auflösung des Lenkgebersystems aus Bedienungselement und Sensoranordnung hängt insbesondere auch von der Materialelastizität des auf elastische Materialdeformation belasteten Elementes ab. Wird ein Material mit stark ausgeprägter Elastizität gewählt, so kann bei der Beaufschlagung des Bedienungselementes mit einem Lenkbefehlvorgabedrehmoment durchaus eine Ausgleichbewegung des Bedienungselementes makroskopisch spürbar sein. Bei hartelastischen Materialien, etwa Metallen, wird die Bedienungsperson bei der Ausübung eines Lenkbefehlvorgabedrehmomentes auf das Bedienungselement eine Bewegung des Bedienungselementes makroskopisch nicht wahrnehmen. Ein Vorteil der Lenkbetätigungseinrichtung mit fixiertem Bedienungselement liegt darin, dass es der Bedienungsperson einen sicheren Halt bei der Steuerung des Fahrzeugs gibt. Dies hat besondere Bedeutung bei Flurförderzeugen, die von einer betreffenden Person in stehender Position gesteuert werden.

Die Erfindung ist somit von konventionellen Hilfskraft-Lenksystemen mit Erfassung von Drehmomenten einer drehbar gelagerten Lenksäule zur Dosierung von Lenkhilfskräften zu unterscheiden.

Das Bedienungselement ist vorzugsweise so gestaltet, dass die Bedienungsperson weitere Funktionen des Fahrzeugs steuern kann, etwa Hub- und Senkfunktionen von Lasttraggabeln eines Flurförderzeugs. Hierzu können spezielle Aktuatorelemente an der Lenkbetätigungseinrichtung vorgesehen sein. Gemäß einer Variante der Erfindung erfolgt die Steuerungsbefehlvorgabe für solche weiteren Funktionen ähnlich wie die Lenkbefehlvorgabe durch Ausübung von Drehmomenten auf das Bedienungselement und dadurch bewirkte elastische Materialdeformationen, insbesondere Torsionen eines mit dem Bedienungselement gekoppelten oder diesem zugehörigen Elementes, wobei die Steuerungsbefehlvorgabedrehmomente in unterschiedlichen, insbesondere im Wesentlichen orthogonal zueinander stehenden Richtungen auszuüben sind, um die verschiedenen Funktionen zu steuern. So kann z.B. für das Lenkbefehlvorgabedrehmoment eine näherungsweise vertikale oder leicht schräg zur Vertikalen stehende Torsionsachse vorgesehen sein, wohingegen für die Hub-Senkbefehlvorgabe für die Hub-Senkfunktion eines Lastentragmittels eines Flurförderzeugs eine horizontale Torsionsachse oder Biegeachse verwendet wird. Bei all diesen Bedienungsoperationen hat die Bedienungsperson vorzugsweise lediglich geringe Kräfte aufzuwenden, ohne jedoch makroskopische Steuerungsbewegungen des Bedienungselementes ausführen zu müssen. Dies erhöht die Sicherheit für die Bedienungsperson.

Die Lenkbetätigungseinrichtung nach der Erfindung lässt sich überdies mit einfachen Mitteln preiswert realisieren, ist wartungsfrei und kaum störanfällig.

Das Bedienungselement ist als Bedienungskonsole mit zwei im Abstand voneinander angeordneten Griffen ausgebildet, vermittels derer eine Bedienungsperson ein Lenkbefehlvorgabedrehmoment auf die Bedienungskonsole ausüben kann. Die Bedienungskonsole hat einen Haltestutzen zu ihrer Befestigung an einem Karosserieteil oder Rahmenteil des Fahrzeugs, wobei die Sensoranordnung dazu eingerichtet ist, Torsionen des Haltestutzens als Maß für Lenkbefehlvorgabedrehmomente zu erfassen. Eine solche Bedienungskonsole kann Aktuatorelemente für verschiedene Fahrzeugfunktionen und insbesondere ein Display zur Anzeige von jeweiligen Fahrzeugzuständen umfassen.

Gemäß einer Weiterbildung der Erfindung ist es vorgesehen, dass eine das Maß des Lenkbefehlvorgabedrehmomentes an die Bedienungsperson rückmeldende Lenkbefehlanzeigeeinrichtung vorgesehen ist. Eine solche Rückmeldung wird gelegentlich auch als "forced feedback" bezeichnet. So kann es z.B. vorgesehen sein, dass die Lenkbefehlsanzeigeeinrichtung eine Vorrichtung zur Erzeugung eines vom Lenkbefehlvorgabedrehmoment abhängigen Vibrationssignals an dem Bedienungselement umfasst. Je größer das dem Bedienungselement ist oder/und je stärker der aktuelle Lenkeinschlag des die Fahrtrichtung bestimmenden Elementes, z.B. eines lenkbaren Rades ist, desto intensiver ist das vorzugsweise in Griffen des Bedienungselementes erzeugte Vibrationssignal. So kann die Vibrationsfrequenz oder/und die Vibrationsintensität in Abhängigkeit von dem ausgeübten Lenkbefehlvorgabedrehmoment oder/und von der Lenkauslenkung des die Fahrtrichtung bestimmenden Elementes abhängig sein.

Die Erfindung betrifft ferner ein Flurförderzeug mit einer erfindungsgemäßen Lenkbetätigungseinrichtung.

Die Erfindung lässt sich verallgemeinern auf ein Fahrzeug mit einem Bedienungselement zur Vorgabe von Steuerungsbefehlen für wenigstens eine Fahr- oder/und Arbeitsfunktion des Fahrzeugs durch Ausübung von Drehmomenten auf das Bedienungselement durch eine Bedienungsperson, einer Sensoranordnung zur Überwachung des Steuerungsbefehlvorgabezustandes des Bedienungselementes und einer elektronischen Steuerungeinrichtung zur Umsetzung der von der Sensoranordnung erfassten Steuerungsbefehlvorgabedaten in Steuerungsinformationen für eine die Fahr- oder Arbeitsfunktion durchführende Vorrichtung, wobei die Sensoranordnung dazu eingerichtet ist, den jeweiligen Steuerungsbefehlvorgabezustand des Bedienungselementes vermittels der Überwachung der elastischen Materialdeformation, insbesondere Torsion, eines durch ein Steuerungsbefehlvorgabedrehmoment am Bedienungselement auf elastische Deformation beanspruchten, mit dem Bedienungselement gekoppelten oder diesem zugehörigen Elementes zu erfassen, wobei die Steuereinrichtung dazu eingerichtet ist, die Antriebsvorrichtung nach einem Steuercharakteristikprogramm zu steuern, welches jeweils die Stärke und/oder Dauer des von der Sensoranordnung erfassten jeweiligen Steuerbefehlsvorgabedrehmomentes berücksichtigt, um Steuerungsinformationen für die Antriebsvorrichtung bereitzustellen. Es kann sich dabei z.B. um ein Straßenfahrzeug, ein Wasserfahrzeug oder ein Luftfahrzeug handeln.

Da das Lenken mit einem quasi starren Lenker ein in gewisser Weise "spektakulärer" Effekt ist, lässt sich die Erfindung in vorteilhafter Weise auch bei Vergnügungsfahrzeugen, z.B. Auto-Scooter-Fahrzeugen verwenden.

Der Hauptanwendungsbereich der Erfindung wird jedoch das Gebiet der Arbeitsfahrzeuge und steuerbaren Arbeitsgeräte sein.

Ein Ausführungsbeispiel der Erfindung wird im Folgenden unter Bezugnahme auf die Figuren näher erläutert.
- Fig. 1: zeigt eine Bedienungskonsole als Bedienungselement einer Lenkbetätigungseinrichtung nach der Erfindung in perspektivischer Darstellung.
- Fig. 2: zeigt eine Konsole modernerer Bauart nach dem Stand der Technik in perspektivischer Darstellung.

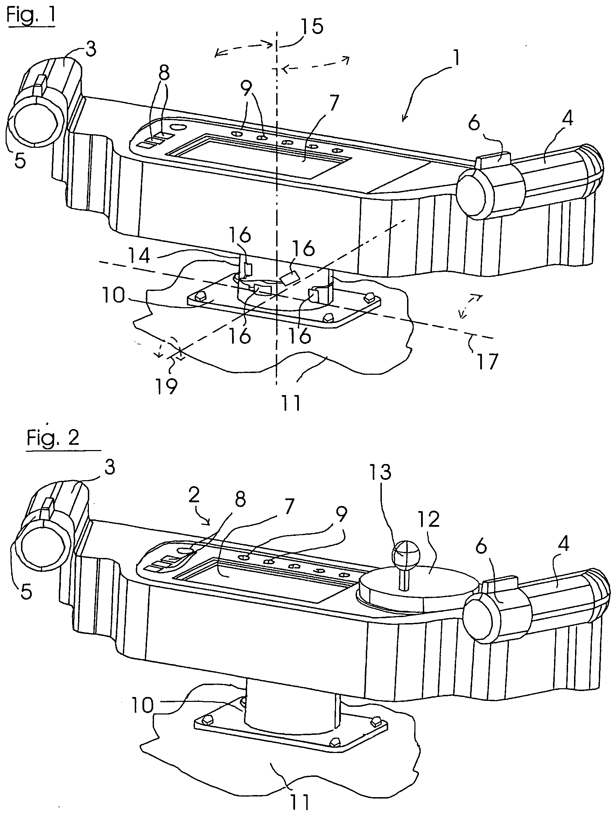

Bei der in Fig. 2 gezeigten Konsole 2 nach dem Stand der Technik handelt sich um ein Bedienpult eines Flurförderzeugs. Die Bedienungskonsole 2 weist zwei Handgriffe 3, 4 für den Fahrer des Flurförderzeugs auf. An den vorderen Enden weisen die Handgriffe 3, 4 Drehsteller 5, 6 auf, welche mit dem Daumen einer am betreffenden Handgriff anliegenden Hand betätigt werden können, um bestimmte Arbeitsfunktionen, etwa Positionierungseinstellungen einer Lasttraggabel zu steuern. Die Bedienungskonsole 2 weist ferner ein Display 7 zur Anzeige diverser Fahrzeugzustände des Flurförderzeugs auf. Mit 8 sind in Fig. 2 Bedienungstasten für einen Steuerrechner gekennzeichnet, dem auch das Display 7 zugeordnet ist. Die Anzeigenelemente 9 dienen ebenfalls zur Anzeige von Fahrzeugzuständen, etwa als Warnanzeigen.

Die Konsole 2 ist an dem Befestigungsflansch 10 mit einem Rahmenteil oder Karosserieteil 11 des Flurförderzeugs verschraubt. Zum Lenken des Flurförderzeugs steht dem Fahrer ein Lenkrad 12 zur Verfügung, welches in der Konsole 2 drehbar gelagert ist, wobei ein (nicht gezeigter) Drehwinkelgeber die jeweilige Drehstellung des Lenkrades 12 erfasst und seine Messinformationen an den Steuerrechner weitergibt. Diese Lenkbefehlvorgabedaten setzt der Steuerrechner in Steuerungsinformationen für einen elektrischen oder ggf. hydraulischen Lenkmotor um, der unmittelbar oder über ein Lenkgetriebe auf wenigstens ein lenkbares Rad des Flurförderzeugs einwirkt, um dessen Lenkstellung nach Maßgabe des am Lenkrad 12 gegebenen Lenkbefehls einzustellen.

Während der Fahrt hat der Fahrer mit einer Hand an dem Lenkraddrehstift 13 das Lenkrad 12 zu bedienen, so dass er zumindest mit dieser Hand keinen sicheren Halt an der Bedienungskonsole 2 hat.

Unter Bezugnahme auf Fig. 1 wird nun ein Ausführungsbeispiel für ein Bedienungselement einer Lenkbetätigungseinrichtung nach der Erfindung erläutert. Bei dem Bedienungselement handelt es sich um eine Bedienungskonsole, welche in mehreren Details der Bedienungskonsole gemäß Fig. 2 entspricht. Insoweit sind zur Kennzeichnung gleicher Elemente in den Figuren 1 und 2 einander entsprechende Bezugszeichen verwendet worden, so dass zur Erläuterung dieser Elemente auf die obige Beschreibung zur Fig. 2 verwiesen werden kann.

Die Konsole 1 in Fig. 1 unterscheidet sich von der Konsole 2 in Fig. 2 insbesondere dadurch, dass die Konsole 1 kein Lenkrad (vgl. 12, 13 in Fig. 2) aufweist. Als Bedienungselement zur Vorgabe von Lenkbefehlen kann der Fahrer die Bedienungskonsole 1 insgesamt handhaben, indem er mit seinen die Handgriffe 3, 4 umfassenden Händen ein Drehmoment auf die Bedienungskonsole 1 ausübt, um eine elastische Materialdeformation, insbesondere Torsion im Bereich des Haltestutzens 14, der gemäß einer Variante ein Rohrelement sein kann, zu erzeugen. Eine diesbezügliche Haupttorsionsachse für die Lenkbefehlvorgaben ist in Fig. 1 mit 15 gekennzeichnet. Im Bereich des Haltestutzens 14 sind Sensoren 16 vorgesehen, welche eine Torsionssensoranordnung bzw. Drehmomentsensoranordnung bilden, mittels welcher die auf die Bedienungskonsole 1 ausgeübten Lenkbefehlvorgabedrehmomente erfasst werden können. Es kann sich bei den Sensorelementen 16 z.B. um Dehnungsmessstreifen, Piezosensoren etc. handeln. Die Messsignale der Sensoren 16 werden von dem (nicht gezeigten) Steuerrechner als Lenkbefehlvorgabedaten verarbeitet und in Steuerungsinformationen für einen (nicht gezeigten) Lenkmotor des Fahrzeugs umgesetzt, um ein davon gesteuertes lenkbares Rad des Fahrzeugs entsprechend der Lenkbefehlvorgabe einzustellen. Die Bedienungskonsole 1 kann in der Weise starr angeordnet sein, dass der Fahrer beim Lenken keine Nachgiebigkeit der Bedienungskonsole verspürt, wenngleich die Sensoren 16 die ausgeübten Lenkdrehmomente erfassen. Bei einer "weicheren" Halterung der Bedienungskonsole etwa vermittels eines Haltestutzens 14 aus Hartgummi, Kunststoff oder dgl. kann eine gewisse Drehnachgiebigkeit der Bedienungskonsole aufgrund der elastischen Torsion spürbar und durchaus gewollt sein. Diese Drehnachgiebigkeit sollte sich zumindest bei einer Ausführungsform der Erfindung in einem sehr engen Winkelbereich halten, damit der Fahrer auch beim Lenken stets mit beiden Händen sicheren Halt an den Haltegriffen 3 und 4 hat und im Übrigen keine Platz in Anspruch nehmenden Lenkbewegungen der Bedienungskonsole 1 erforderlich werden.

In Fig. 1 sind auch die Daumendrehschalter 5, 6 für weitere Fahrzeugfunktionen erkennbar. Bei einem Flurförderzeug können dies die schon erwähnten Positionierungsfunktionen der Lasttraggabel, insbesondere Hub- und Senkfunktionen sein.

Gemäß einer bevorzugten Weiterbildung der Erfindung ist es vorgesehen, Drehmomente, die der Fahrer in Bezug auf eine zu der Torsionsachse 15 orthogonale und im Wesentlichen horizontale Achse 17 auf die Bedienungskonsole 1 ausübt, mittels betreffender Sensoren 16 an geeigneter Stelle zu erfassen. Der Steuerrechner setzt die dabei gewonnenen Daten in Steuerungsinformationen für weitere Fahrzeugfunktionen um. Dies können z.B. die Hub- und Senkfunktion der Lasttraggabel eines Flurförderzeugs sein. Versucht der Fahrer die Bedienungskonsole 1 um die Achse 17 nach vorn zu verkippen, so wird daraus dann der Steuerbefehl "Lasttraggabel senken" abgeleitet. Versucht der Fahrer die Bedienungskonsole 1 in entgegengesetzter Richtung um die Achse 17 nach hinten zu verkippen, so leitet der Steuerrechner aus dem dabei gemessenen Kippmoment den Steuerbefehl "Lasttraggabel heben" ab. Der Steuerrechner gibt diese Steuerungsinformationen an den normalerweise hydraulischen Hubantrieb weiter. Die Daumendrehschalter 5, 6 sind bei der vorstehend beschriebenen Erfindungsvariante entbehrlich oder stehen für andere Funktionen zur Verfügung.

Denkbar ist ferner, dass auf die vorstehend erläuterte Weise auch Fahrfunktionen des Fahrzeugs steuerbar sind, etwa die Vorwärts-Rückwärts-Fahrtvorgabe mit Geschwindigkeitssteuerung.

Es sei darauf hingewiesen, dass es zahlreiche weitere Möglichkeiten der Realisierung eines Bedienungselementes für eine Lenkbetätigungseinrichtung nach der Erfindung gibt. So kann z.B. anstelle des Haltestutzens 14 in Fig. 1 ein Torsionsstab oder ein Torsionsrohr oder eine Torsionsfeder als Konsolenträgerelement vorgesehen sein, wobei die Federhärte das Maß der Nachgiebigkeit der Bedienungskonsole beim Anlegen von Steuerungsbefehlvorgabedrehmomenten bestimmt.

Die Lenkbetätigungseinrichtung in Fig. 1 kann mit einer sogenannten "Forced-Feedback"-Funktion ausgestattet sein. So kann z.B. vorgesehen sein, dass je nach Stärke des auf die Bedienungskonsole 1 ausgeübten Drehmomentes oder/und je nach Grad der Verstellung des lenkbaren Rades aus der Neutralstellung heraus ein Vibrationssignal an den Handgriffen 3, 4 spürbar ist oder/und ein Anzeigesignal auf dem Display 7 zu beobachten ist oder/und ein akustisches Signal ausgegeben wird, welches den Fahrer über das Maß des Steuerungseingriffes informiert.

Der Steuerungsrechner ist so programmiert, dass er die jeweiligen Lenkbefehlvorgaben einer bestimmten Lenkcharakteristik entsprechend umsetzt. Durch Aufruf unterschiedlicher Programme können solche Lenkcharakteristika variiert werden. Entsprechende Modifikationen des Steuerungsprogrammes können auch in Bezug auf andere Bedienfunktionen vorgesehen sein.

In Fig. 1 ist mit 19 eine weitere Achse angedeutet, in Bezug auf welche weitere Drehmomente auf die Bedienungskonsole 1 ausgeübt werden können, um zusätzliche Funktionen zu steuern.

## Patentansprüche

1. Flurförderzeug als Fahrzeug, umfassend eine Lenkantriebsvorrichtung und eine Lenkbetätigungseinrichtung mit einem Bedienungselement (1) zur Vorgabe von Lenkbefehlen durch Ausübung von Drehmomenten auf das Bedienungselement (1) durch eine Bedienungsperson, einer Sensoranordnung (16) zur Überwachung des Lenkbefehlvorgabezustandes des Bedienungselementes (1) und einer elektronischen Steuereinrichtung zur Umsetzung der von der Sensoranordnung (16) erfassten Lenkbefehlvorgabedaten in Steuerungsinformationen für die Lenkantriebsvorrichtung,
wobei die Sensoranordnung (16) dazu eingerichtet ist, den jeweiligen Lenkbefehlvorgabezustand des Bedienungselementes (1) vermittels der Überwachung der elastischen Materialdeformation, insbesondere Torsion, eines durch ein Lenkbefehlvorgabedrehmoment am Bedienungselement (1) auf elastische Deformation beanspruchten, mit dem Bedienungselement (1) gekoppelten oder diesem zugehörigen Elementes (14) zu erfassen, und wobei die Steuereinrichtung dazu eingerichtet ist, die Lenkantriebsvorrichtung nach einem Lenkcharakteristikprogramm zu steuern, welches jeweils die Stärke und/oder Dauer des von der Sensoranordnung erfassten jeweiligen Lenkbefehlvorgabedrehmomentes berücksichtigt, um Steuerungsinformationen für die Lenkantriebsvorrichtung bereitzustellen,
wobei das Bedienungselement (1) eine Bedienungskonsole mit zwei im Abstand voneinander angeordneten Griffen (3, 4) ist, vermittels derer eine Bedienungsperson ein Lenkbefehlvorgabedrehmoment auf die Bedienungskonsole (1) ausüben kann,
**dadurch gekennzeichnet, dass** die Bedienungskonsole (1) mittels eines Haltestutzens (14) an einem Karosserie- oder Rahmenteil (11) des Fahrzeugs so fahrzeugfest fixiert ist, dass sie über elastische Materialdeformation hinaus keinen Lenkbewegungsspielraum hat,
wobei die Sensoranordnung (16) dazu eingerichtet ist, Torsionen des Haltestutzens (14) als Maß für Lenkbefehlvorgabedrehmomente zu erfassen.

2. Flurförderzeug nach Anspruch 1, **dadurch gekennzeichnet, dass** für die Steuereinrichtung verschiedene Lenkcharakteristikprogramme zur Verfügung stehen, die wahlweise aufrufbar sind.

3. Flurförderzeug nach einem der vorhergehenden Ansprüche, **dadurch gekennzeichnet, dass** die Bedienungskonsole (1) zur Steuerung weiterer Fahrzeugfunktionen eingerichtet ist.

4. Flurförderzeug nach einem der vorhergehenden Ansprüche, **dadurch gekennzeichnet, dass** eine das Maß des Lenkbefehlvorgabedrehmomentes an die Bedienungsperson rückmeldende Lenkbefehlanzeigeeinrichtung vorgesehen ist.

5. Flurförderzeug nach Anspruch 4, **dadurch gekennzeichnet, dass** die Lenkbefehlsanzeigeeinrichtung eine Vorrichtung zur Erzeugung eines vom Lenkbefehlvorgabedrehmoment oder/und vom aktuellen Lenkeinschlag der Lenkantriebsvorrichtung abhängigen Vibrationssignals an dem Bedienungselement umfasst.

## Claims

1. Industrial truck in the form of a vehicle, which comprises a steering drive device and a steering actuation apparatus comprising an operating control (1) for inputting steering commands by an operator exerting torques on the operating control (1), comprising a sensor assembly (16) for monitoring the steering command input state of the operating control (1), and comprising an electronic control apparatus for converting the steering command input data detected by the sensor assembly (16) into control information for the steering drive device,
the sensor assembly (16) being designed to detect the relevant steering command input state of the operating control (1) by monitoring the elastic material deformation, in particular torsion, of an element (14) that is coupled to or associated with the operating control (1) and is stressed by elastic deformation due to a steering command input torque on the operating control (1), and the control apparatus being designed to control the steering drive device in accordance with a steering characteristic program which in each case takes into account the level and/or duration of the respective steering command input torques detected by the sensor assembly in order to provide control information for the steering drive device,
the operating control (1) being a control panel comprising two handles (3, 4) arranged at a distance from one another, by means of which an operator can exert a steering command input torque on the control panel (1),
**characterised in that** the control panel (1) is securely fixed to a body part or frame part (11) of the vehicle by means of a retaining connector (14) such that it does not have any steering movement clearance beyond elastic material deformation,
the sensor assembly (16) being designed to detect torsion of the retaining connector (14) as a measure of steering command input torques.

2. Industrial truck according to claim 1, **characterised in that** different steering characteristic programs that can be retrieved as desired are available for the control apparatus.

3. Industrial truck according to either of the preceding claims, **characterised in that** the control panel (1) is designed for controlling additional vehicle functions.

4. Industrial truck according to any of the preceding claims, **characterised in that** a steering command display apparatus is provided that feeds the measure of the steering command input torque back to the operator.

5. Industrial truck according to claim 4, **characterised in that** the steering command display apparatus comprises a device for generating a vibration signal on the operating control that is dependent on the steering command input torque and/or on the current steering angle of the steering drive device.

## Revendications

1. Chariot de manutention en tant que véhicule, comprenant un dispositif d'entraînement de braquage et un organe de commande de braquage avec un élément de commande (1) destiné à la spécification d'instructions de braquage par l'application de couples sur l'élément de commande (1) par un opérateur, avec un dispositif de capteur (16) destiné à la surveillance de l'état spécifié des instructions de braquage de l'élément de commande (1) et avec un système de commande électronique destiné à la conversion des données spécifiées des instructions de braquage détectées par le dispositif de capteur (16) en informations de commande pour le dispositif d'entraînement de braquage,
le dispositif de capteur (16) étant agencé pour détecter l'état spécifié des instructions de braquage de l'élément de commande (1) au moyen de la surveillance de la déformation de matériau élastique, en particulier de la torsion, d'un élément (14) contraint en déformation élastique par un couple spécifié des instructions de braquage sur l'élément de commande (1), couplé à l'élément de commande (1) ou associé à celui-ci, et le système de commande étant agencé pour commander le dispositif d'entraînement de braquage selon un programme de caractéristiques de braquage qui prend à chaque fois en considération l'intensité et/ou la durée du couple spécifié des instructions de braquage respectif détecté par le dispositif de capteur pour fournir des informations de commande pour le dispositif d'entraînement de braquage,
l'élément de commande (1) étant une console de commande avec deux poignées (3, 4) disposées à distance l'une de l'autre, au moyen desquelles un opérateur peut exercer un couple spécifié des instructions de braquage sur la console de commande (1),
**caractérisé en ce que** la console de commande (1) est fixée de façon stationnaire par rapport au véhicule au moyen d'un raccord de retenue (14) sur une partie de carrosserie ou de cadre (11) du véhicule de telle sorte qu'elle n'a aucune marge de manoeuvre de braquage au-delà la déformation de matériau élastique,
le dispositif de capteur (16) étant agencé pour détecter des torsions du raccord de retenue (14) en tant que mesure des couples spécifiés des instructions de braquage.

2. Chariot de manutention selon la revendication 1, **caractérisé en ce que** différents programmes de caractéristiques de braquage sont disponibles pour le système de commande et peuvent être appelés au choix.

3. Chariot de manutention selon l'une des revendications précédentes, **caractérisé en ce que** la console de commande (1) est agencée pour la commande d'autres fonctions du véhicule.

4. Chariot de manutention selon l'une des revendications précédentes, **caractérisé en ce qu'**il est prévu un système d'affichage des instructions de braquage renvoyant à l'opérateur la mesure du couple spécifié des instructions de braquage.

5. Chariot de manutention selon la revendication 4, **caractérisé en ce que** le système d'affichage des instructions de braquage comprend un dispositif destiné à la production, sur l'élément de commande, d'un signal de vibration qui dépend du couple spécifié des instructions de braquage et/ou de l'angle de braquage actuel du dispositif d'entraînement de braquage.
